# EUROPEAN PATENT APPLICATION

(11) **EP 4 826 002 A1**
(43) Date of publication of application: **21.10.2026**
(21) Application number: 24904392.8
(22) Date of filing: 12.12.2024
(51) Int. Cl.: C22B 26/12, C22B 1/08, C22B 3/12

(54) **METHOD FOR RECOVERING LITHIUM FROM WASTE SAGGAR**

(30) Priority: 13.12.2023 KR 20230180812
(71) Applicant: POSCO Holdings Inc., Pohang-si, Gyeongsangbuk-do 37859 (KR)
(72) Inventor: Han, Gichun, Pohang-si, Gyeongsangbuk-do 37859 (KR); Heo, Jungho, Pohang-si, Gyeongsangbuk-do 37859 (KR); Jeung, Kee Uek, Pohang-si, Gyeongsangbuk-do 37859 (KR)
(74) Representative: Pfenning, Meinig & Partner mbB
(86) International application number: PCT/KR2024/096804
(87) International publication number: WO 2025/127827

(57) **Abstract**

A method for recovering lithium from a waste refractory saggar according to the present invention comprises: contacting the waste refractory saggar with a salt solution; recovering the waste refractory saggar contacted with the salt solution, and heat-treating the recovered waste refractory saggar at a temperature of 950°C or higher; separating a waste refractory saggar altered layer from the heat-treated waste refractory saggar; and recovering lithium from the separated waste refractory saggar altered layer.

## Description

### [TECHNICAL FIELD]

The present invention relates to a method for recovering lithium from a waste refractory saggar, and specifically, to a method for effectively separating and recovering lithium from a waste refractory saggar that is discarded after being used in preparation of a positive electrode active material.

### [BACKGROUND ART]

A positive electrode active material for a lithium secondary battery is prepared by calcining salts of cobalt, nickel, manganese, and the like, including lithium, at a high temperature in a refractory saggar mainly composed of silicon, aluminum, and magnesium oxides.

At this time, raw materials of the positive electrode active material may react with a surface of the refractory saggar, and as the refractory saggar is repeatedly used, the surface of the refractory saggar is eroded and altered by the raw materials of the positive electrode active material, and thus the refractory saggar must be discarded after being used a certain number of times.

Accordingly, a portion containing lithium exists in the waste refractory saggar discarded after repeated use, and a method capable of efficiently separating the portion is required.

Conventionally, in order to recover lithium from a waste refractory saggar, it has been common to pulverize the entire waste refractory saggar and then leach lithium by roasting, acid treatment, or the like. However, in this case, even a portion having a low lithium content is introduced into the process, and thus there is a problem in that treatment costs are relatively high.

Accordingly, there is a need to develop a method for selectively recovering only a lithium-containing portion of a waste refractory saggar.

### [DETAILED DESCRIPTION OF THE INVENTION]

### [Technical Problem]

The present invention is intended to provide a method for recovering lithium from a waste refractory saggar, which is capable of efficiently separating and recovering a lithium-containing portion from the waste refractory saggar.

### [Technical Solution]

The present invention provides a method for recovering lithium from a waste refractory saggar, comprising: contacting the waste refractory saggar with a salt solution; recovering the waste refractory saggar contacted with the salt solution, and heat-treating the recovered waste refractory saggar at a temperature of 950°C or higher; separating a waste refractory saggar altered layer from the heat-treated waste refractory saggar; and recovering lithium from the separated waste refractory saggar altered layer.

### [Advantageous Effects]

The method for recovering lithium from a waste refractory saggar according to the present invention has an advantage of reducing treatment costs because an altered layer containing lithium is separated from a waste refractory saggar discarded after preparation of a positive electrode active material, and lithium is recovered therefrom.

In addition, lithium can be recovered from the waste refractory saggar and recycled, which is desirable from an environmental standpoint, and there is an advantage of reducing waste of the waste refractory saggar.

### [BRIEF DESCRIPTION OF THE DRAWINGS]

FIG. 1 is an image showing a cross-section of a waste refractory saggar.
FIG. 2 is an image showing specimens of a waste refractory saggar according to some embodiments of the present invention.
FIGS. 3 to 5 are, with respect to waste refractory saggar specimens according to Experimental Examples, photographs viewed from above of portions that did not pass through a vibrating sieve, photographs viewed from the side, and images schematically illustrating exfoliated portions and non-exfoliated regions in the photographs viewed from above.

### [MODE FOR CARRYING OUT THE INVENTION]

Hereinafter, embodiments of the present invention will be described in detail. However, these are provided as examples, and the present invention is not limited thereby, and the present invention is only defined by the scope of the claims to be described below.

In the present invention, when a member is referred to as being positioned "on" another member, this includes not only a case in which the member is in direct contact with the other member, but also a case in which another member is interposed between the two members.

In the present invention, when a part is referred to as "comprising" a certain component, this means that other components may be further included, rather than excluding other components, unless specifically stated to the contrary.

One aspect of the present invention relates to a method for recovering lithium from a waste refractory saggar, comprising: contacting the waste refractory saggar with a salt solution; recovering the waste refractory saggar contacted with the salt solution, and heat-treating the recovered waste refractory saggar at a temperature of 950°C or higher; separating a waste refractory saggar altered layer from the heat-treated waste refractory saggar; and recovering lithium from the separated waste refractory saggar altered layer.

The method for recovering lithium from a waste refractory saggar according to the present invention has an advantage in that lithium can be efficiently recovered because adhesion at an interface between an altered layer and a non-altered layer is weakened, the altered layer is separated, and lithium is recovered therefrom by roasting and acid treatment.

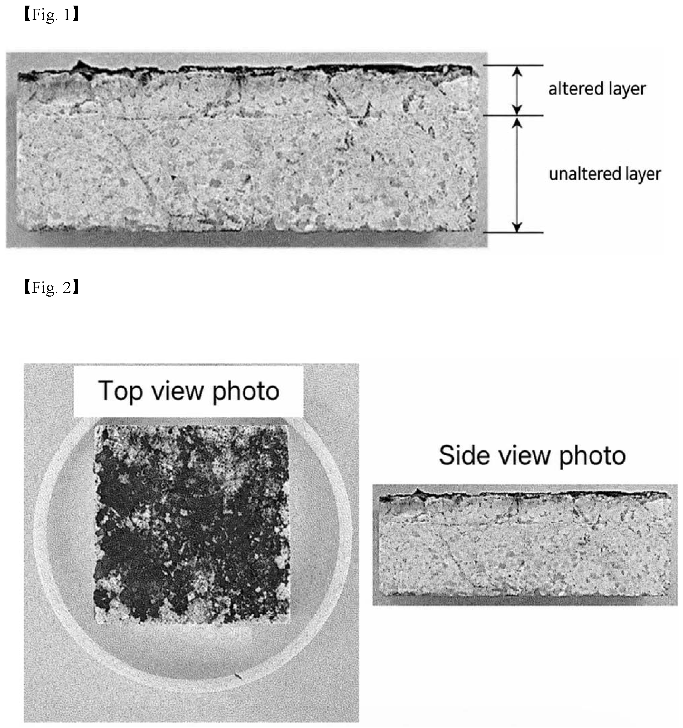

Referring to FIG. 1, it can be seen that a waste refractory saggar has layers having different properties. Specifically, a portion in which a positive electrode active material is prepared may be divided into an altered layer that is altered as a lithium raw material is deposited and contains a large amount of lithium, and a non-altered layer corresponding to an existing refractory saggar.

Table 1 below shows main components (unit: wt%) of the altered layer and the non-altered layer (existing refractory saggar), and it can be confirmed that a large amount of lithium is contained in the altered layer.

The main mineral phases of the altered layer were lithium-containing LiAlO₂ and Li₄SiO₄.

**[Table 1]**

| Item | Li | Al | Si | Mg |
|---|---|---|---|---|
| Altered Layer (Lithium-Containing) | 3.00 | 22.9 | 8.15 | 3.94 |
| Non-Altered Layer (Existing Refractory Saggar) | 0.08 | 34.6 | 10.6 | 7.31 |

In the present invention, the altered layer containing a large amount of lithium is separated from the non-altered layer, and lithium is recovered.

The method for recovering lithium from a waste refractory saggar according to the present invention includes contacting the waste refractory saggar with a salt solution.

The refractory saggar is formed of a porous material. When the waste refractory saggar is contacted with the salt solution, the salt solution is absorbed into the porous waste refractory saggar. When heat treatment is performed at a temperature of 950°C or higher, which will be described below, adhesion at the interface between the altered layer and the non-altered layer can be weakened.

Before the step of contacting the waste refractory saggar with the salt solution, the method may further include cutting the waste refractory saggar, but is not limited thereto.

When the step of cutting the waste refractory saggar is further included, contact between the waste refractory saggar and the salt solution is further facilitated, which is preferable from a process standpoint.

In an embodiment of the present invention, the salt solution may include one or more compounds selected from the group consisting of an alkali compound and an alkaline earth compound.

For example, the salt solution may include one or more selected from the group consisting of sodium chloride, potassium chloride, sodium carbonate, potassium carbonate, sodium bicarbonate, potassium bicarbonate, calcium chloride, calcium nitrate, calcium sulfate, magnesium chloride, magnesium nitrate, magnesium sulfate, disodium phosphate, barium chloride, trisodium phosphate, sodium silicate, potassium sulfide, sodium sulfite, zinc sulfate, aluminum chloride, and sodium sulfate.

Specifically, the salt solution may be obtained by dissolving, in water, one or more compounds selected from the group consisting of the alkali compound and the alkaline earth compound, which are easily soluble in water.

In another embodiment of the present invention, the salt solution may include sodium silicate.

Specifically, the salt solution may include a water glass solution.

In another embodiment of the present invention, the one or more compounds selected from the group consisting of the alkali compound and the alkaline earth compound may be included in an amount of 3 wt% or more, preferably 7 wt% or more, and more preferably 10 wt% to 20 wt%, based on 100 wt% of the total salt solution.

When the one or more compounds selected from the group consisting of the alkali compound and the alkaline earth compound are included within the above range, the salt solution effectively penetrates into the waste refractory saggar, so that the waste refractory saggar altered layer can be easily separated in the step of separating the waste refractory saggar altered layer from the waste refractory saggar, which will be described below, and thus this is preferable.

In another embodiment of the present invention, the step of contacting the waste refractory saggar with the salt solution may be immersing the waste refractory saggar in the salt solution.

The immersion may be performed by completely submerging the waste refractory saggar in the salt solution, and may be performed for 10 minutes to 90 minutes, preferably 20 minutes to 60 minutes, and more preferably 20 minutes to 40 minutes, but is not limited thereto.

When the immersion time is within the above range, penetration of the salt solution may be sufficiently achieved, which is preferable.

In another embodiment of the present invention, the salt solution may be applied to a surface of the waste refractory saggar.

The application may be performed by one or more methods selected from the group consisting of application using a brush, spray coating, knife casting, and doctor blade coating, but is not limited thereto.

The amount of the salt solution applied is not limited. However, the applied salt solution may be applied in an amount sufficient to penetrate into the waste refractory saggar.

The application may be performed multiple times, but is also not limited thereto.

The method for recovering lithium from a waste refractory saggar according to the present invention includes recovering the waste refractory saggar contacted with the salt solution, and heat-treating the recovered waste refractory saggar at a temperature of 950°C or higher.

The main mineral phases of the altered layer are lithium-containing LiAlO₂, Li₄SiO₄, and the like, and since the altered layer and the non-altered layer are strongly attached, there is a problem in that it is somewhat difficult to separate the altered layer from the non-altered layer only by mechanical impact.

Accordingly, the method for recovering lithium from a waste refractory saggar according to the present invention weakens adhesion at the interface between the altered layer and the non-altered layer by recovering the waste refractory saggar contacted with the salt solution and heat-treating the recovered waste refractory saggar at a temperature of 950°C or higher.

In another embodiment of the present invention, the heat treatment may be performed at a temperature of 1,000°C to 1,500°C.

In another embodiment of the present invention, the heat treatment may be performed at a temperature of 1,000°C to 1,300°C.

When the heat treatment is performed within the above range, it is possible to maximize the phenomenon of weakening adhesion at the interface between the altered layer and the non-altered layer while minimizing heat treatment time, which is preferable.

In another embodiment of the present invention, the step of heat-treating the recovered waste refractory saggar at a temperature of 950°C or higher may be performed for 30 minutes to 3 hours, preferably 40 minutes to 2 hours and 30 minutes, and more preferably 40 minutes to 1 hour.

When the heat treatment is performed within the above time range, it is preferable because the waste refractory saggar altered layer can be easily separated in the step of separating the waste refractory saggar altered layer from the waste refractory saggar, which will be described below, while minimizing energy consumption.

The heat treatment may be performed in an electric furnace or a sintering furnace, but is not limited thereto.

In another embodiment of the present invention, after the step of heat-treating the recovered waste refractory saggar at a temperature of 950°C or higher, the method may further include cooling the heat-treated waste refractory saggar.

The cooling may be furnace cooling to room temperature, but is not limited thereto.

The method for recovering lithium from a waste refractory saggar according to the present invention includes separating a waste refractory saggar altered layer from the heat-treated waste refractory saggar.

In another embodiment of the present invention, the step of separating the waste refractory saggar altered layer from the heat-treated waste refractory saggar may include separating the waste refractory saggar altered layer from the waste refractory saggar non-altered layer using one or more selected from the group consisting of a crusher, a shearing machine, and a vibrator.

Specifically, in the method for recovering lithium from a waste refractory saggar according to the present invention, the waste refractory saggar altered layer may be separated from the waste refractory saggar non-altered layer by applying physical force to the heat-treated waste refractory saggar.

Preferably, the step of separating the waste refractory saggar altered layer from the heat-treated waste refractory saggar may be performed using the vibrator.

The vibrator may specifically be a vibrating sieve.

In another embodiment of the present invention, the step of separating the waste refractory saggar altered layer from the heat-treated waste refractory saggar may include separating the waste refractory saggar non-altered layer and the waste refractory saggar altered layer by sieving.

The sieving may be performed using a sieve having holes with a diameter of 3 mm to 15 mm, preferably 5 mm to 13 mm, and more preferably 7 mm to 10 mm.

Through the sieving, only the waste refractory saggar altered layer separated from the waste refractory saggar non-altered layer passes through the holes having the above size, thereby separating the waste refractory saggar altered layer.

The sieving may be vibrating sieving using a vibrating sieve, but is not limited thereto.

The step of separating the waste refractory saggar altered layer from the heat-treated waste refractory saggar and the step of separating the waste refractory saggar non-altered layer and the waste refractory saggar altered layer by sieving may be performed simultaneously, but are not limited thereto.

For example, the waste refractory saggar specimen heat-treated as described above may be placed on the sieve and vibrated using the vibrator for 5 minutes to 20 minutes, specifically 8 minutes to 15 minutes, and more specifically 8 minutes to 10 minutes, thereby sieving and separating the waste refractory saggar altered layer, but the present invention is not limited thereto.

In another embodiment of the present invention, the separated waste refractory saggar altered layer may have a lithium content of 1.0 wt% or more based on the total weight of the separated waste refractory saggar altered layer.

The method for recovering lithium from a waste refractory saggar according to the present invention includes recovering lithium from the separated waste refractory saggar altered layer.

Before the step of recovering lithium from the waste refractory saggar altered layer, the method may further include pulverizing the waste refractory saggar altered layer as necessary, but is not limited thereto.

For example, the waste refractory saggar altered layer may be pulverized using a pulverizer and then acid-treated.

Examples of the pulverizer may include a sample mill, a hammer mill, a pin mill, a wing mill, a tornado mill, a hammer crusher, and the like, but are also not limited thereto.

As a method for recovering lithium from the waste refractory saggar altered layer, for example, acid leaching, a hydrothermal method, a sulfuric acid roasting method, or the like may be used, but the method is not limited thereto.

For example, by performing a step of roasting the waste refractory saggar altered layer, lithium may be converted into a form such as lithium oxide, lithium carbonate, or lithium hydroxide.

The roasting step may be heat-treating the waste refractory saggar altered layer at a temperature of 550°C to 650°C for 1 hour to 4 hours. When the roasting step is performed within the above temperature range, it is preferable because the lithium compound contained in the waste refractory saggar altered layer is sufficiently changed into a form easily soluble in water or an acidic solution during acid treatment, which will be described below.

The roasting step may be performed in a rotary kiln furnace, an electric furnace, or the like, and may be performed under an air atmosphere, but is not limited thereto.

In addition, lithium may also be recovered by dissolving lithium contained in the waste refractory saggar altered layer by contacting the waste refractory saggar altered layer with an acidic solution, but is not limited thereto.

As the acidic solution, one obtained by adding an acid such as sulfuric acid to tap water, industrial water, distilled water, purified water, ion-exchanged water, pure water, ultrapure water, or the like may be used.

The concentration of the acidic solution may be adjusted such that the pH in a state in which lithium is dissolved satisfies 7 to 10.

After dissolving the lithium, the lithium may be recovered by precipitation, but is not limited thereto.

The method for recovering lithium from a waste refractory saggar according to the present invention has an excellent advantage in that lithium can be efficiently separated and recovered as compared with a case of recovering lithium from the entire waste refractory saggar after pulverizing the entire waste refractory saggar, because the method does not recover lithium from the entire waste refractory saggar after pulverizing the entire waste refractory saggar, but selectively separates only an altered layer containing lithium and recovers lithium therefrom.

Hereinafter, preferred Examples and Comparative Examples of the present invention will be described. However, the following Examples are merely preferred embodiments of the present invention, and the present invention is not limited to the following Examples.

### Preparation Example

Using a sodium silicate solution (water glass) (Sodium silicate solution, purity: SiO₂ 35%, Na₂O 17%), 500 g of three types of sodium silicate solutions (water glass), named WG1, WG2, and WG3, having different concentrations as shown in Table 2 were prepared.

**[Table 2]**

| Composition | | WG1 | WG2 | WG3 |
|---|---|---|---|---|
| Weight ratio (g) | Sodium silicate solution | 50 | 100 | 150 |
| | Distilled water | 450 | 400 | 350 |

### Experimental Example

The waste refractory saggar was cut to prepare specimens each having a square shape of about 3 cm × 3 cm as shown in FIG. 2.

Thereafter, each specimen was placed in a beaker, completely submerged in the sodium silicate solution prepared according to the Preparation Example, and immersed for 30 minutes.

After immersion, the specimen was taken out of the beaker, maintained for 1 hour in an electric furnace at each temperature (800°C, 900°C, and 1,000°C) according to Table 3 below at a temperature increase rate of 10°C per minute, and then furnace-cooled. At this time, for comparison, a specimen not immersed in a solution (WG0) was also heat-treated in the same manner.

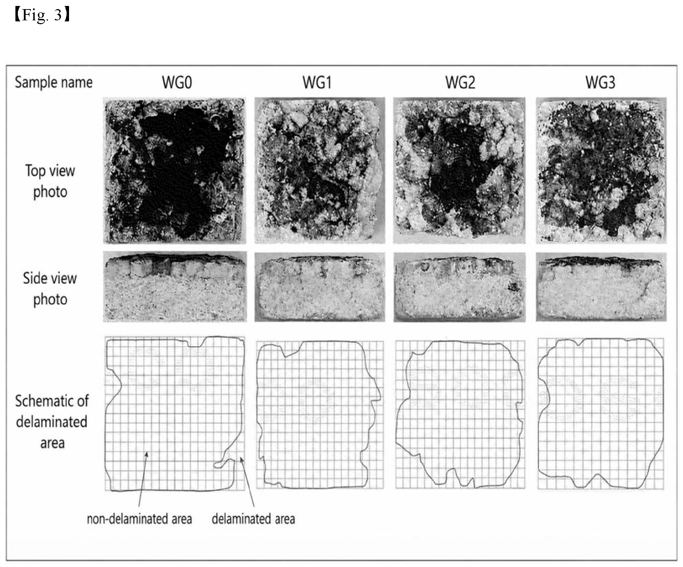

The furnace-cooled specimen was placed on a 9.5 mm sieve, vibrated for 10 minutes in a vibrating sieve, and then a photograph viewed from above of a portion that did not pass through the sieve, a photograph viewed from the side, and exfoliated portions and non-exfoliated regions in the photograph viewed from above were schematically illustrated in FIGS. 3 to 5.

In addition, the weights and fractions of a portion that did not pass through the vibrating sieve and a portion that passed through the vibrating sieve in each specimen were measured and are shown in Table 3 below.

**[Table 3]**

| Temperature (°C) | Item | Weight and ratio | | | | | | | |
|---|---|---|---|---|---|---|---|---|---|
| | | WG0 | | WG1 | | WG2 | | WG3 | |
| | | Weight (g) | % | Weight (g) | % | Weight (g) | % | Weight (g) | % |
| 1,000 | Sieve-Passed Fraction (Altered Layer) | 4.5 | 8.2 | 5.1 | 9.8 | 14.9 | 26.5 | 11.7 | 24.9 |
| | Sieve-Retained Fraction | 49.8 | 91.8 | 46.3 | 90.2 | 41.5 | 73.5 | 35.1 | 75.1 |
| | Total | 54.3 | 100.0 | 51.3 | 100.0 | 56.4 | 100.0 | 46.7 | 100.0 |
| 900 | Sieve-Passed Fraction (Altered Layer) | 1.5 | 2.9 | 2.8 | 5.9 | 2.2 | 5.2 | 1.3 | 2.5 |
| | Sieve-Retained Fraction | 50.5 | 97.1 | 45.3 | 94.1 | 41.2 | 94.8 | 50.1 | 97.5 |
| | Total | 52.1 | 100.0 | 48.2 | 100.0 | 43.5 | 100.0 | 51.4 | 100.0 |
| 800 | Sieve-Passed Fraction (Altered Layer) | 1.1 | 2.2 | 2.6 | 5.9 | 2.9 | 6.0 | 1.8 | 3.4 |
| | Sieve-Retained Fraction | 46.6 | 97.8 | 42.1 | 94.1 | 46.3 | 94.0 | 50.6 | 96.6 |
| | Total | 47.6 | 100.0 | 44.7 | 100.0 | 49.2 | 100.0 | 52.3 | 100.0 |

FIG. 3 schematically illustrates photographs viewed from above, photographs viewed from the side, and exfoliated portions and non-exfoliated regions in the photographs viewed from above, after heat treatment at 800°C and after portions did not pass through the vibrating sieve. It can be seen that, in all of the specimen not immersed in a solution (WG0) and the WG1, WG2, and WG3 specimens having different water glass concentrations, the lithium-containing altered layer was hardly exfoliated.

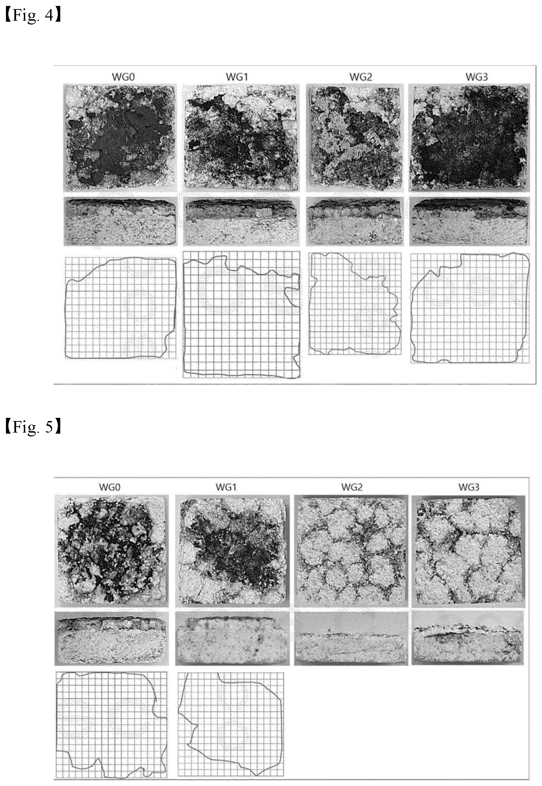

FIG. 4 schematically illustrates photographs viewed from above, photographs viewed from the side, and exfoliated portions and non-exfoliated regions in the photographs viewed from above, after heat treatment at 900°C and after portions did not pass through the vibrating sieve. It can be seen that, in all of the specimen not immersed in a solution (WG0) and WG1, WG2, and WG3 having different water glass concentrations, the lithium-containing altered layer was hardly exfoliated.

FIG. 5 schematically illustrates photographs viewed from above, photographs viewed from the side, and exfoliated portions and non-exfoliated regions in the photographs viewed from above, after heat treatment at 1,000°C and after portions did not pass through the vibrating sieve. It can be seen that the specimen not immersed in a solution (WG0) and the WG1 specimen had slightly more exfoliated portions than the 800°C and 900°C specimens. In contrast, it was confirmed that all portions of the WG2 and WG3 specimens were exfoliated.

Referring to Table 3, it can be seen that, in the specimens immersed in the WG2 and WG3 solutions and then heat-treated at 1,000°C, the sieve-passed fraction was about 25%, and most of the lithium-containing altered layer was exfoliated.

Accordingly, it can be seen that, when the waste refractory saggar is immersed in a salt solution having a certain concentration and then heat-treated at 1,000°C or higher, the lithium-containing altered layer can be easily exfoliated (separated) from the non-altered layer by vibration.

The present invention is not limited to the above Examples, and may be prepared in various different forms. A person having ordinary skill in the art to which the present invention pertains will understand that the present invention may be embodied in other specific forms without changing the technical spirit or essential features of the present invention. Therefore, the above-described Examples should be understood as illustrative in all respects and not restrictive.

## Claims

1. A method for recovering lithium from a waste refractory saggar, comprising:
contacting the waste refractory saggar with a salt solution;
recovering the waste refractory saggar contacted with the salt solution, and heat-treating the recovered waste refractory saggar at a temperature of 950°C or higher;
separating a waste refractory saggar altered layer from the heat-treated waste refractory saggar; and
recovering lithium from the separated waste refractory saggar altered layer.

2. The method for recovering lithium from a waste refractory saggar of claim 1,
wherein separating the waste refractory saggar altered layer from the heat-treated waste refractory saggar comprises separating the waste refractory saggar altered layer from a waste refractory saggar non-altered layer using one or more selected from the group consisting of a crusher, a shearing machine, and a vibrator.

3. The method for recovering lithium from a waste refractory saggar of claim 1,
wherein the salt solution comprises one or more compounds selected from the group consisting of an alkali compound and an alkaline earth compound.

4. The method for recovering lithium from a waste refractory saggar of claim 3,
wherein the one or more compounds selected from the group consisting of the alkali compound and the alkaline earth compound are included in an amount of 3 wt% or more based on 100 wt% of the total salt solution.

5. The method for recovering lithium from a waste refractory saggar of claim 1,
wherein the salt solution comprises sodium silicate.

6. The method for recovering lithium from a waste refractory saggar of claim 1,
wherein contacting the waste refractory saggar with the salt solution comprises immersing the waste refractory saggar in the salt solution.

7. The method for recovering lithium from a waste refractory saggar of claim 1,
wherein contacting the waste refractory saggar with the salt solution comprises applying the salt solution to a surface of the waste refractory saggar.

8. The method for recovering lithium from a waste refractory saggar of claim 1,
wherein, in heat-treating the waste refractory saggar, the heat treatment is performed at a temperature of 1,000°C to 1,500°C.

9. The method for recovering lithium from a waste refractory saggar of claim 8,
wherein, in heat-treating the waste refractory saggar, the heat treatment is performed at a temperature of 1,000°C to 1,300°C.

10. The method for recovering lithium from a waste refractory saggar of claim 1,
wherein heat-treating the recovered waste refractory saggar at a temperature of 950°C or higher is performed for 30 minutes to 3 hours.

11. The method for recovering lithium from a waste refractory saggar of claim 1,
further comprising, after heat-treating the recovered waste refractory saggar at a temperature of 950°C or higher,
cooling the heat-treated waste refractory saggar.

12. The method for recovering lithium from a waste refractory saggar of claim 2,
wherein separating the waste refractory saggar altered layer from the heat-treated waste refractory saggar comprises separating the waste refractory saggar non-altered layer and the waste refractory saggar altered layer by sieving.

13. The method for recovering lithium from a waste refractory saggar of claim 1,
wherein the separated waste refractory saggar altered layer has a lithium content of 1.0 wt% or more based on a total weight thereof.
